# EUROPEAN PATENT SPECIFICATION

(11) **EP 4 191 737 B1**
(45) Date of publication and mention of the grant of the patent: **13.08.2025**
(21) Application number: 22858797.8
(22) Date of filing: 19.08.2022
(51) Int. Cl.: H01M 10/42, H01M 50/586, H01M 50/531, H01M 10/04, H01M 50/533, H01M 50/591, H01M 50/595, H01M 4/04, H01M 4/13, H01M 4/139, H01M 4/70, H01M 10/052, H01M 10/0585, H01M 10/0583, H01M 10/0525

(54) **ELECTRODE ASSEMBLY HAVING SHORT CIRCUIT PREVENTION COATING PORTION**
ELEKTRODENANORDNUNG MIT BESCHICHTUNGSTEIL ZUR KURZSCHLUSSVERHINDERUNG
ENSEMBLE ÉLECTRODE PRÉSENTANT UNE PARTIE REVÊTEMENT POUR LA PRÉVENTION D'UN COURT-CIRCUIT

(30) Priority: 19.08.2021 KR 20210109580
(43) Date of publication of application: 07.06.2023
(73) Proprietor: LG Energy Solution, Ltd., Seoul 07335 (KR)
(72) Inventor: WON, Kwang Ho, Daejeon 34122 (KR); OH, Jung Shik, Daejeon 34122 (KR)
(74) Representative: Plasseraud IP
(86) International application number: PCT/KR2022/012411
(87) International publication number: WO 2023/022560

(56) References cited:
- WO-A1-2015/140912
- JP-A- 2001 035 477
- JP-A- 2010 055 906
- JP-B2- 6 292 678
- KR-A- 20120 048 508
- KR-B1- 101 586 530
- US-A1- 2011 129 701
- US-A1- 2016 141 721

## Description

### [Technical Field]

This application claims the benefit of priority to Korean Patent Application No. 2021-0109580 filed on August 19, 2021.

The present invention relates to an electrode assembly having a short circuit prevention coating portion, and more particularly to an electrode assembly having a short circuit prevention coating portion configured such that a coating portion, configured to prevent the occurrence of short circuit due to contact between a positive electrode mixture layer formed on a positive electrode tab and a negative electrode sheet, is formed at a part of the negative electrode sheet, whereby safety is improved.

### [Background Art]

In recent years, a secondary battery, which is capable of being charged and discharged, has been widely used as an energy source for wireless mobile devices. In addition, the secondary battery has attracted attention as an energy source for an electric vehicle, a hybrid electric vehicle, etc. presented as alternatives to existing gasoline and diesel vehicles using fossil fuels, which cause air pollution. As a result, the kind of applications using the secondary battery has been very diversified due to advantages of the secondary battery, and it is expected that, in the future, the secondary battery will be applied to many more fields and products than now.

Depending on the construction of an electrode and an electrolytic solution, the secondary battery may be classified as a lithium ion battery, a lithium ion polymer battery, or a lithium polymer battery. Thereamong, usage of the lithium polymer battery, which has a low possibility of leakage of the electrolytic solution and is easily manufactured, has increased. Depending on the shape of a battery case, the secondary battery is generally classified as a cylindrical battery, configured such that an electrode assembly is mounted in a cylindrical metal can, a prismatic battery, configured such that an electrode assembly is mounted in a prismatic metal can, or a pouch-shaped battery, configured such that an electrode assembly is mounted in a pouch-shaped case made of an aluminum laminate sheet.

The electrode assembly mounted in the battery case is a power generating element configured to have a structure including a positive electrode, a negative electrode, and a separator interposed between the positive electrode and the negative electrode so as to be charged and discharged. The electrode assembly is classified as a jelly-roll type electrode assembly, which is configured to have a structure in which a long sheet type positive electrode having an active material applied thereto and a long sheet type negative electrode having an active material applied thereto are wound in the state in which a separator is interposed therebetween, or a stacked type cell assembly including unit cells, each of which is configured to have a structure in which a plurality of positive electrodes each having a predetermined size and a plurality of negative electrodes each having a predetermined size are sequentially stacked in the state in which separators are interposed respectively therebetween. Document WO2015140912A1 discloses a nonaqueous electrolyte secondary battery.

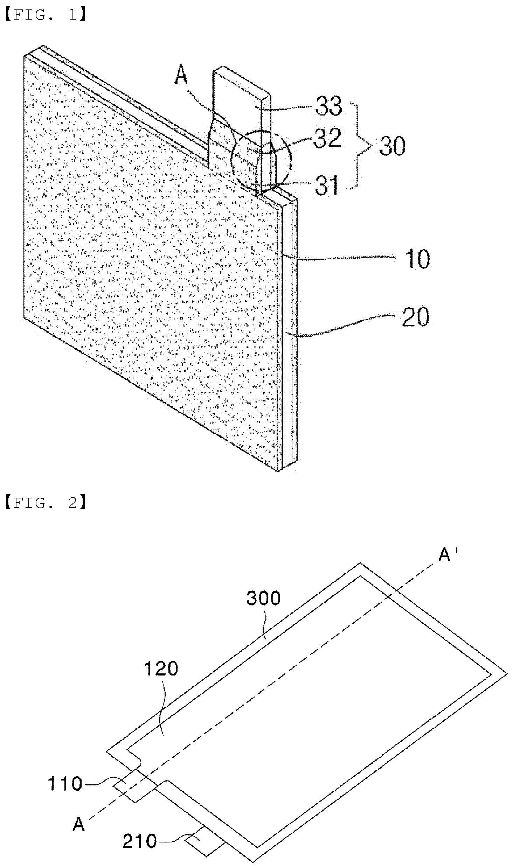

FIG. 1 is a perspective view showing a conventional electrode plate.

Referring to FIG. 1, the conventional electrode plate includes an electrode current collector 10, an electrode active material layer 20, and an electrode tab 30.

The electrode tab 30 may include an extension area 31, an inclined portion 32, and a non-coating portion 33, and an electrode mixture layer including an electrode active material is applied to the extension area 31 and the inclined portion 32.

During manufacture of an electrode assembly, a separator may shrink due to heat in a lamination process in which heat is applied, whereby the non-coating portion 33 or the extension area 31 and the inclined portion 32 of the conventional electrode tab 30 may come into contact with an adjacent electrode plate, and therefore short circuit may occur.

In addition, since the extension area 31 and the inclined portion 32 are formed at the electrode tab 30, an overhang reversal phenomenon in which the capacity ratio of a negative electrode to a positive electrode (N/P ratio) is reversed may occur depending on characteristics in formation of the mixture layer.

### (Prior Art Document)

(Patent Document 1) Korean Patent Application Publication No. 2011-0060036

### [Disclosure]

### [Technical Problem]

The present invention has been made in view of the above problems, and it is an object of the present invention to provide an electrode assembly having a short circuit prevention coating portion configured such that the short circuit prevention coating portion prevents contact between a positive electrode mixture layer formed at a lower side of a positive electrode tab and a negative electrode sheet located on the same vertical line as the positive electrode mixture layer.

It is another object of the present invention to provide an electrode assembly having a short circuit prevention coating portion configured such that a shoulder portion is formed so as to extend from a negative electrode sheet by a predetermined length on the same vertical line as a positive electrode mixture layer formed at a lower side of a positive electrode tab, whereby the occurrence of an overhang reversal phenomenon is inhibited, and therefore it is possible to prevent deposition of lithium.

### [Technical Solution]

The scope of the invention is defined by appended claim 1. An electrode assembly having a short circuit prevention coating portion according to the present invention to accomplish the above objects includes a positive electrode sheet (100) having a positive electrode tab (110) protruding from an outer end of one side thereof and a positive electrode mixture layer (120) including a positive electrode active material applied to a lower part of the positive electrode tab (110) and to a current collector, a negative electrode sheet (200) having a negative electrode tab (210) protruding from an outer end of one side thereof and a negative electrode mixture layer (220) including a negative electrode active material applied to a lower part of the negative electrode tab (210) and to a current collector, and a separator (300) located between the positive electrode sheet (100) and the negative electrode sheet (200), wherein the negative electrode sheet (200) has a shoulder portion (230) extending in a horizontal direction by a predetermined length, the negative electrode active material being applied to the shoulder portion, and the shoulder portion (230) is wrapped with a coating portion (400).

Also, in the electrode assembly according to the present invention, the coating portion (400) may include a pair of horizontal portions (410) arranged side by side and a vertical portion (420) connecting corresponding edges of the pair of horizontal portions (410) to each other.

Also, in the electrode assembly according to the present invention, the coating portion (400) may be made of an insulative material.

Also, in the electrode assembly according to the present invention, the shoulder portion (230) may be formed on a vertical extension line of the positive electrode tab (110).

Also, in the electrode assembly according to the present invention, the shoulder portion (230) may have a width (W1) greater than the width (W2) of the positive electrode tab.

In addition, the present invention provides a battery cell including the electrode assembly.

In addition, the present invention provides a battery pack including at least one battery cell.

An electrode assembly manufacturing method according to the present invention includes a step of preparing a positive electrode sheet, a negative electrode sheet, and a separator, a step of notching the negative electrode sheet to form a shoulder portion, a step of applying a coating portion onto the shoulder portion, and a step of stacking the positive electrode sheet, the separator, and the negative electrode sheet.

Also, in the electrode assembly manufacturing method according to the present invention, in the step of stacking the positive electrode sheet, the separator, and the negative electrode sheet, the stacking may be performed such that the center line of the shoulder portion and the center line of the positive electrode tab are located on the same line.

Also, in the electrode assembly manufacturing method according to the present invention, the electrode assembly may have a stacked type structure, a zigzag type structure, or a stacked and folded type structure.

Also, in the electrode assembly manufacturing method according to the present invention, the electrode assembly may be constituted by unit cells that are either bi-cells each having a single pole plate and opposite outer pole plates having a same polarity or full-cells each having opposite outer pole plates having different polarities.

### [Advantageous Effects]

As is apparent from the above description, an electrode assembly having a short circuit prevention coating portion according to the present invention has an advantage in that the coating portion is provided between a positive electrode mixture layer formed at a positive electrode tab and a shoulder portion of a negative electrode sheet in order to prevent contact therebetween, and therefore safety is improved.

In addition, the electrode assembly having the short circuit prevention coating portion according to the present invention has an advantage in that the shoulder portion is formed so as to extend by a predetermined length on a vertical line of the positive electrode mixture layer formed at the positive electrode tab, whereby the occurrence of an overhang reversal phenomenon is inhibited, and therefore it is possible to prevent deposition of lithium.

### [Description of Drawings]

FIG. 1 is a perspective view showing a conventional electrode plate.
FIG. 2 is a perspective view of an electrode assembly according to a preferred embodiment of the present invention.
FIG. 3 is a sectional view of the electrode assembly taken along line A-A' of FIG. 2.
FIG. 4 is a plan view of a positive electrode sheet and a negative electrode sheet of the electrode assembly according to the preferred embodiment of the present invention excluding a separator when viewed from above.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrode assembly having a short circuit prevention coating portion according to the present invention will be described with reference to the accompanying drawings.

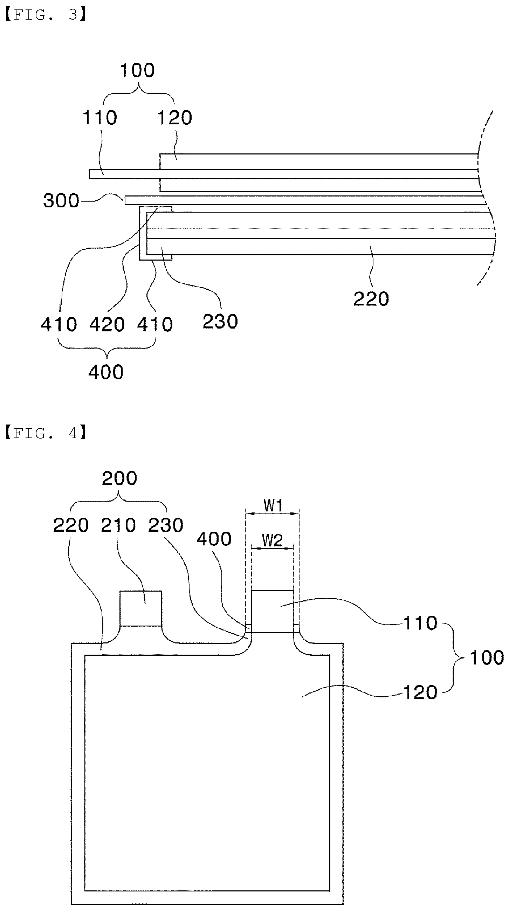

FIG. 2 is a perspective view of an electrode assembly according to a preferred embodiment of the present invention, FIG. 3 is a sectional view of the electrode assembly taken along line A-A' of FIG. 2, and FIG. 4 is a plan view of a positive electrode sheet and a negative electrode sheet of the electrode assembly according to the preferred embodiment of the present invention excluding a separator when viewed from above.

Referring to FIGs. 2 to 4, the electrode assembly according to the preferred embodiment of the present invention includes a positive electrode sheet 100, a negative electrode sheet 200, a separator 300, and a coating portion 400.

A positive electrode tab 110 protrudes from an outer circumferential end of one side of the positive electrode sheet 100 by a predetermined length, and a positive electrode mixture layer 120 including a positive electrode active material is applied to a lower part of the positive electrode tab 110 protruding by the predetermined length and to a current collector.

Although the positive electrode mixture layer 120 applied to the lower part of the positive electrode tab 110 is shown as having a right-angled shape in FIG. 3, the positive electrode mixture layer 120 applied to the lower part of the positive electrode tab 110 may be a sliding shape having a predetermined curvature or a slope having a predetermined angle.

A negative electrode tab 210 protrudes from an outer circumferential end of one side of the negative electrode sheet 200 by a predetermined length, and a negative electrode mixture layer 220 including a negative electrode active material is applied to a lower part of the negative electrode tab 210 protruding by the predetermined length and to a current collector.

Here, the negative electrode sheet 200 has a larger area than the positive electrode sheet 100 in order to inhibit the occurrence of an overhang reversal phenomenon.

In addition, a shoulder portion 230 extending by a predetermined length is formed at the part of the negative electrode sheet 200 that overlaps the part of the positive electrode sheet 100 at which the positive electrode tab 110 is formed when the electrode assembly is formed.

That is, the shoulder portion 230 may be formed at the negative electrode sheet 200 located on a vertical extension line of the positive electrode tab 110, and may be formed at the portion of the negative electrode sheet 200 corresponding to the lower part of the positive electrode tab 110 to which the positive electrode mixture layer 120 is applied so as to extend by the predetermined length in the state in which the negative electrode mixture layer 220 is applied thereto. In this structure, it is possible to inhibit the occurrence of an overhang reversal phenomenon.

The negative electrode mixture layer 220 including the negative electrode active material is applied to the shoulder portion 230 when the negative electrode sheet 200 is formed.

In addition, the shoulder portion 230 is formed such that the width W1 of the shoulder portion is greater than the width W2 of the positive electrode tab 110. In this case, it is possible to inhibit the occurrence of an overhang reversal phenomenon due to the positive electrode mixture layer 120 formed at the lower part of the positive electrode tab 110, whereby it is possible to prevent the occurrence of a lithium deposition phenomenon, and therefore it is possible to improve safety.

In addition, the shoulder portion 230 may have a planar rectangular shape, and the protruding length of the shoulder portion 230 may be greater than the length of the positive electrode mixture layer 120 applied to the lower part of the positive electrode tab 110.

The separator 300 is located between the positive electrode sheet 100 and the negative electrode sheet 200 and serves to prevent short circuit between the positive electrode sheet 100 and the negative electrode sheet 200 and to allow only movement of lithium ions therethrough. It is preferable for the separator to be made of any one selected from among polyethylene, polypropylene, a dual polyethylene/polypropylene layer, a triple polyethylene/polypropylene/polyethylene layer, a triple polypropylene/polyethylene/polypropylene layer, and organic fiber filter paper; however, the present invention is not limited thereto.

The coating portion 400 includes a pair of horizontal portions 410 arranged side by side in a state of being spaced apart from each other by a predetermined distance and a vertical portion 420 configured to connect corresponding edges of the pair of horizontal portions 410 to each other.

The coating portion 400 is located in a shape wrapping the shoulder portion 230 to prevent short circuit.

As an example, during manufacture of the electrode assembly, the separator may shrink due to heat after a lamination process in which heat is applied, whereby the positive electrode tab 110 and the shoulder portion 230 may come into contact with each other, and therefore short circuit may occur.

Since the coating portion 400 is located in a shape wrapping the shoulder portion 230, however, it is possible to prevent the occurrence of short circuit due to contact between the positive electrode tab 110 and the shoulder portion 230.

The coating portion 400 may be made of an insulative material, such as rubber or silicone, and the material for the coating portion is not restricted as long as the coating portion is located in a shape wrapping the shoulder portion 230 to maintain an insulation state.

The present invention may provide a battery cell including the electrode assembly having at least one of the above features.

The present invention may provide a battery pack including at least one battery cell.

An electrode assembly manufacturing method according to a preferred embodiment of the present invention includes a step of preparing a positive electrode sheet 100, a negative electrode sheet 200, and a separator 300, a step of notching the negative electrode sheet 200 to form a shoulder portion 230, a step of forming a coating portion 400 at the shoulder portion 230, and a step of stacking the positive electrode sheet 100, the separator 300, and the negative electrode sheet 200.

The step of preparing a positive electrode sheet, a negative electrode sheet, and a separator is a step of applying a mixture layer including an electrode active material to a current collector to form a positive electrode sheet and a negative electrode sheet and preparing a separator configured to prevent short circuit between the positive electrode sheet and the negative electrode sheet.

The step of notching the negative electrode sheet 200 to form a shoulder portion 230 is a step of notching the negative electrode sheet 200 having the mixture layer including the electrode active material applied to the current collector to form a negative electrode tab 210 and a shoulder portion 230 located spaced apart from the negative electrode tab 210 by a predetermined distance.

At this time, the positive electrode sheet 100 may be notched to form a positive electrode tab 110, and a positive electrode mixture layer 120 may be applied to a lower end of the positive electrode tab 110.

In the step of forming a coating portion 400 at the shoulder portion 230, the shoulder portion 230 formed by notching may be wrapped with a coating portion 400 made of an insulative material to prevent the occurrence of short circuit due to contact with the positive electrode tab 110.

The step of stacking the positive electrode sheet 100, the separator 300, and the negative electrode sheet 200 is a step of stacking the positive electrode sheet 100, the separator 300, and the negative electrode sheet 200 to form an electrode assembly.

Here, stacking may be performed such that the center line of the shoulder portion 230 formed at the negative electrode sheet 200 and the center line of the positive electrode tab 110 are located on the same line. The reason for this is that, if stacking is performed such that the shoulder portion 230 and the positive electrode tab 110 are misaligned with each other, an overhang reversal phenomenon may occur.

The electrode assembly manufactured by the electrode assembly manufacturing method according to the present invention may be configured to have a stacked type structure, a zigzag type structure, or a stacked and folded type structure.

Here, the electrode assembly according to the present invention may be a jelly-roll type cell assembly, which is configured to have a structure in which a long sheet type positive electrode and a long sheet type negative electrode are wound in the state in which a separator is interposed therebetween, a stacked type cell assembly including unit cells, each of which is configured to have a structure in which a rectangular positive electrode and a rectangular negative electrode are stacked in the state in which a separator is interposed therebetween, a stacked and folded type cell assembly, which is configured to have a structure in which unit cells are wound using a long separation film, or a laminated and stacked type cell assembly, which is configured to have a structure in which unit cells are stacked and attached to each other in the state in which a separator is interposed therebetween; however, the present invention in not limited thereto.

A sheet type separation film forms a stacked and folded type cell assembly having a structure in which a plurality of unit cells is wound, and the outermost part of the separation film located on a vertical extension line of a sliding portion of an electrode at the outermost side of the separation film is bent at the same curvature as the sliding portion so as to be brought into tight contact therewith, whereby it is possible to prevent the occurrence of a deposition phenomenon due to diffusion resistance in a space between a sliding portion of the outermost electrode and a separation film in a conventional electrode assembly.

In addition, the electrode assembly manufactured by the electrode assembly manufacturing method according to the present invention may be constituted by unit cells, such as bi-cells, each of which has a single pole plate and opposite outer pole plates having the same polarity, or full-cells, each of which has opposite outer pole plates having different polarities.

Here, the bi-cell may be an A type bi-cell, which is configured to have a structure in which a positive electrode, a negative electrode, and a positive electrode are sequentially stacked in the state in which separators are interposed respectively therebetween, or a C type bi-cell, which is configured to have a structure in which a negative electrode, a positive electrode, and a negative electrode are sequentially stacked in the state in which separators are interposed respectively therebetween.

### (Description of Reference Symbols)

- 100:: Positive electrode sheet
- 110:: Positive electrode tab
- 120:: Positive electrode mixture layer
- 200:: Negative electrode sheet
- 210:: Negative electrode tab
- 220:: Negative electrode mixture layer
- 230:: Shoulder portion
- 300:: Separator
- 400:: Coating portion
- 410:: Horizontal portion
- 420:: Vertical portion
- W1:: Width of shoulder portion
- W2:: Width of positive electrode tab
- 120:: Positive electrode mixture layer
- 200:: Negative electrode sheet
- 210:: Negative electrode tab
- 220:: Negative electrode mixture layer
- 230:: Shoulder portion
- 300:: Separator
- 400:: Coating portion
- 410:: Horizontal portion
- 420:: Vertical portion
- W1:: Width of shoulder portion
- W2:: Width of positive electrode tab

## Claims

1. An electrode assembly comprising:
a positive electrode sheet (100) having a positive electrode tab (110) protruding from an outer end of one side thereof and a positive electrode mixture layer (120) comprising a positive electrode active material applied to a lower part of the positive electrode tab (110) and to a positive electrode current collector, the lower part being a positive electrode tab end close to a coated area of the positive electrode current collector;
a negative electrode sheet (200) having a negative electrode tab (210) protruding from an outer end of one side thereof and a negative electrode mixture layer (220) comprising a negative electrode active material applied to a lower part of the negative electrode tab (210) and to a negative electrode current collector, the lower part being a negative electrode tab end close to a coated area of the negative electrode current collector; and
a separator (300) located between the positive electrode sheet (100) and the negative electrode sheet (200),
wherein the negative electrode sheet (200) has a shoulder portion (230) extending in a horizontal direction (A-A') by a predetermined length and formed at a part of the negative electrode sheet (200) that overlaps the part of the positive electrode sheet (100) at which the positive electrode tab (110) is formed, the negative electrode active material being applied to the shoulder portion (230), and the shoulder portion (230) is wrapped with a coating portion (400) configured to prevent contact between the positive electrode mixture (120) layer formed at the positive electrode tab (110) and the shoulder portion (230) of the negative electrode sheet (200).

2. The electrode assembly according to claim 1, wherein the coating portion (400) comprises:
a pair of horizontal portions (410) arranged side by side; and
a vertical portion (420) connecting corresponding edges of the pair of horizontal portions (410) to each other.

3. The electrode assembly according to claim 2, wherein the coating portion (420) is made of an insulative material.

4. The electrode assembly according to claim 1, wherein the shoulder portion (230) is formed on a vertical extension line of the positive electrode tab (110).

5. The electrode assembly according to claim 4, wherein the shoulder portion (230) has a width (W1) greater than a width (W2) of the positive electrode tab (110), being widths (W1) and (W2) orthogonal to the vertical extension line of the positive electrode tab (110).

6. A battery cell comprising the electrode assembly according to any one of claims 1 to 5.

7. A battery pack comprising at least one battery cell according to claim 6.

8. A manufacturing method of an electrode assembly according to claim 1, said method comprising:
preparing a positive electrode sheet (100), a negative electrode sheet (200), and a separator (300);
notching the negative electrode sheet to form a shoulder portion (230);
applying a coating portion (400) onto the shoulder portion (230); and
stacking the positive electrode sheet (100), the separator (300), and the negative electrode sheet (200).

9. The method according to claim 8, wherein, in the step of stacking the positive electrode sheet (100), the separator (300), and the negative electrode sheet (200), the stacking is performed such that a center line of the shoulder portion (230) and a center line of a positive electrode tab (110) are located on the same line.

10. The method according to claim 8, wherein the electrode assembly has a stacked type structure, a zigzag type structure, or a stacked and folded type structure.

11. The method according to claim 8, wherein the electrode assembly is constituted by unit cells that are either bi-cells each having a single pole plate and opposite outer pole plates having a same polarity or full-cells each having opposite outer pole plates having different polarities.

## Patentansprüche

1. Elektrodenanordnung, umfassend:
eine positive Elektrodenbahn (100), welche einen positiven Elektrodenstreifen (110), welcher von einem äußeren Ende einer Seite davon vorsteht, und eine positive Elektrodenmischungsschicht (120) aufweist, welche ein positives Elektrodenaktivmaterial umfasst, welches auf einen unteren Teil des positiven Elektrodenstreifens (110) und auf einen positiven Elektrodenstromkollektor aufgebracht ist, wobei der untere Teil ein positives Elektrodenstreifenende ist, welches nahe an einem beschichteten Bereich des positiven Elektrodenstromkollektors ist;
eine negative Elektrodenbahn (200), welche einen negativen Elektrodenstreifen (210), welcher von einem äußeren Ende einer Seite davon vorsteht, und eine negative Elektrodenmischungsschicht (220) aufweist, welche ein negatives Elektrodenaktivmaterial umfasst, welches auf einen unteren Teil des negativen Elektrodenstreifens (210) und auf einen negativen Elektrodenstromkollektor aufgebracht ist, wobei der untere Teil ein negatives Elektrodenstreifenende ist, welches nahe an einem beschichteten Bereich des negativen Elektrodenstromkollektors ist; und
einen Separator (300), welcher zwischen der positiven Elektrodenbahn (100) und der negativen Elektrodenbahn (200) angeordnet ist,
wobei die negative Elektrodenbahn (200) einen Schulterabschnitt (230) aufweist, welcher sich in einer horizontalen Richtung (A - A') um eine vorbestimmte Länge erstreckt und an einem Teil der negativen Elektrodenbahn (200) gebildet ist, welcher den Teil der positiven Elektrodenbahn (100) überlagert, an welchem der positive Elektrodenstreifen (110) gebildet ist, wobei das negative Elektrodenaktivmaterial auf den Schulterabschnitt (230) aufgebracht ist, und wobei der Schulterabschnitt (230) mit einem Beschichtungsabschnitt (400) umhüllt ist, welcher dazu eingerichtet ist, einen Kontakt zwischen der positiven Elektrodenmischung- (120) Schicht, welche an dem positiven Elektrodenstreifen (110) gebildet ist, und dem Schulterabschnitt (230) der negativen Elektrodenbahn (200) zu verhindern.

2. Elektrodenanordnung nach Anspruch 1, wobei der Beschichtungsabschnitt (400) umfasst:
ein Paar horizontaler Abschnitte (410), welche nebeneinander angeordnet sind; und
einen vertikalen Abschnitt (420), welcher entsprechende Ränder des Paars horizontaler Abschnitte (410) miteinander verbindet.

3. Elektrodenanordnung nach Anspruch 2, wobei der Beschichtungsabschnitt (420) aus einem isolierenden Material hergestellt ist.

4. Elektrodenanordnung nach Anspruch 1, wobei der Schulterabschnitt (230) an einer vertikalen Erstreckungslinie des positiven Elektrodenstreifens (110) gebildet ist.

5. Elektrodenanordnung nach Anspruch 4, wobei der Schulterabschnitt (230) eine Breite (W1) aufweist, welche größer als eine Breite (W2) des positiven Elektrodenstreifens (110) ist, wobei die Breiten (W1) und (W2) orthogonal zu der vertikalen Erstreckungslinie des positiven Elektrodenstreifens (110) sind.

6. Batteriezelle, welche die Elektrodenanordnung nach einem der Ansprüche 1 bis 5 umfasst.

7. Batteriepack, umfassend wenigstens eine Batteriezelle nach Anspruch 6.

8. Herstellungsverfahren einer Elektrodenanordnung nach Anspruch 1, wobei das Verfahren umfasst:
Vorbereiten einer positiven Elektrodenbahn (100), einer negativen Elektrodenbahn (200) und eines Separators (300);
Kerben der negativen Elektrodenbahn, um einen Schulterabschnitt (230) zu bilden;
Aufbringen eines Beschichtungsabschnitts (400) auf den Schulterabschnitt (230); und
Stapeln der positiven Elektrodenbahn (100), des Separators (300) und der negativen Elektrodenbahn (200).

9. Verfahren nach Anspruch 8, wobei, in dem Schritt des Stapelns der positiven Elektrodenbahn (100), des Separators (300) und der negativen Elektrodenbahn (200), das Stapeln durchgeführt wird, so dass eine Mittellinie des Schulterabschnitts (230) und eine Mittellinie eines positiven Elektrodenstreifens (110) an der gleichen Linie angeordnet sind.

10. Verfahren nach Anspruch 8, wobei die Elektrodenanordnung eine Struktur vom gestapelten Typ, eine Struktur vom zickzack-Typ oder einer Struktur vom gestapelten und gefalteten Typ aufweist.

11. Verfahren nach Anspruch 8, wobei die Elektrodenanordnung durch Einheitszellen gebildet ist, welche entweder Bi-Zellen, welche jeweils eine einzelne Polplatte und gegenüberliegende äußere Polplatten aufweisen, welche eine gleiche Polarität aufweisen, oder Vollzellen sind, welche jeweils äußere Polplatten aufweisen, welche verschiedene Polaritäten aufweisen.

## Revendications

1. Ensemble électrode comprenant :
une feuille d'électrode positive (100) présentant une languette d'électrode positive (110) faisant saillie depuis une extrémité externe d'un côté de celle-ci et une couche de mélange d'électrode positive (120) comprenant un matériau actif d'électrode positive appliqué sur une partie inférieure de la languette d'électrode positive (110) et sur un collecteur de courant d'électrode positive, la partie inférieure étant une extrémité de languette d'électrode positive proche d'une zone revêtue du collecteur de courant d'électrode positive ;
une feuille d'électrode négative (200) présentant une languette d'électrode négative (210) faisant saillie depuis une extrémité externe d'un côté de celle-ci et une couche de mélange d'électrode négative (220) comprenant un matériau actif d'électrode négative appliqué sur une partie inférieure de la languette d'électrode négative (210) et sur un collecteur de courant d'électrode négative, la partie inférieure étant une extrémité de languette d'électrode négative proche d'une zone revêtue du collecteur de courant d'électrode négative ; et
un séparateur (300) situé entre la feuille d'électrode positive (100) et la feuille d'électrode négative (200),
dans lequel la feuille d'électrode négative (200) présente une portion d'épaulement (230) s'étendant dans une direction horizontale (A-A') d'une longueur prédéterminée et formée au niveau d'une partie de la feuille d'électrode négative (200) qui chevauche la partie de la feuille d'électrode positive (100) au niveau de laquelle la languette d'électrode positive (110) est formée, le matériau actif d'électrode négative étant appliqué sur la portion d'épaulement (230), et la portion d'épaulement (230) est enveloppée d'une portion de revêtement (400) configurée pour empêcher un contact entre la couche de mélange d'électrode positive (120) formée au niveau de la languette d'électrode positive (110) et la portion d'épaulement (230) de la feuille d'électrode négative (200).

2. Ensemble électrode selon la revendication 1, dans lequel la portion de revêtement (400) comprend :
une paire de portions horizontales (410) agencées côte à côte ; et
une portion verticale (420) reliant des bords correspondants de la paire de portions horizontales (410) les uns aux autres.

3. Ensemble électrode selon la revendication 2, dans lequel la portion de revêtement (420) est constituée d'un matériau isolant.

4. Ensemble électrode selon la revendication 1, dans lequel la portion d'épaulement (230) est formée sur une ligne d'extension verticale de la languette d'électrode positive (110).

5. Ensemble électrode selon la revendication 4, dans lequel la portion d'épaulement (230) présente une largeur (W1) supérieure à une largeur (W2) de la languette d'électrode positive (110), les largeurs (W1) et (W2) étant orthogonales à la ligne d'extension verticale de la languette d'électrode positive (110).

6. Élément de batterie comprenant l'ensemble électrode selon l'une quelconque des revendications 1 à 5.

7. Bloc-batterie comprenant au moins un élément de batterie selon la revendication 6.

8. Procédé de fabrication d'un ensemble électrode selon la revendication 1, ledit procédé comprenant :
la préparation d'une feuille d'électrode positive (100), d'une feuille d'électrode négative (200) et d'un séparateur (300) ;
l'encochage de la feuille d'électrode négative pour former une portion d'épaulement (230) ;
l'application d'une portion de revêtement (400) sur la portion d'épaulement (230) ; et
l'empilage de la feuille d'électrode positive (100), du séparateur (300) et de la feuille d'électrode négative (200).

9. Procédé selon la revendication 8, dans lequel, lors de l'étape d'empilage de la feuille d'électrode positive (100), du séparateur (300) et de la feuille d'électrode négative (200), l'empilage est réalisé de sorte qu'une ligne médiane de la portion d'épaulement (230) et une ligne médiane d'une languette d'électrode positive (110) soient situées sur la même ligne.

10. Procédé selon la revendication 8, dans lequel l'ensemble électrode présente une structure de type empilée, une structure de type en zigzag, ou une structure de type empilée et pliée.

11. Procédé selon la revendication 8, dans lequel l'ensemble électrode est constitué par des éléments unitaires qui sont soit des bi-éléments ayant chacun une seule plaque de pôle et des plaques de pôle externes opposées ayant une même polarité, soit des éléments entiers ayant chacun des plaques de pôle externes opposées ayant des polarités différentes.
